# DEMANDE DE BREVET EUROPEEN

(11) **EP 4 760 567 A1**
(43) Date de publication de la demande: **17.06.2026**
(21) Numéro de dépôt: 25221893.8
(22) Date de dépôt: 09.12.2025
(51) Int. Cl.: G06F 21/55

(54) **SYSTÈME ET PROCÉDÉ D'ANALYSE D'ÉVÈNEMENTS INFORMATIQUES**

(30) Priorité: 10.12.2024 FR 2413764
(71) Demandeur: Nucleon-Security, 75008 Paris (FR)
(72) Inventeur: BOTTE, Antoine, 78600 LE MESNIL LE ROI (FR)
(74) Mandataire: Yes My Patent

(57) **Abrégé**

La présente invention concerne un procédé et un système configurés pour l'analyse d'évènements informatiques dans le cadre de la cyber-sécurité. En particulier, la présente invention concerne la collecte d'évènement, la normalisation d'éléments propres à ces évènements et le calcul d'un score de criticité global sur la base d'une analyse de similarité avec une base de données d'évènements de référence.

## Description

### DOMAINE TECHNIQUE DE L'INVENTION

La présente invention concerne le domaine technique des systèmes de sécurité informatique, en particulier, le domaine technique des systèmes d'analyse à la demande d'événements de sécurité.

### ETAT DE LA TECHNIQUE

Dans le domaine technique de la détection des menaces informatiques, également appelées « menaces cyber », les approches actuelles reposent principalement sur la reconnaissance de signatures et de comportements malveillants connus. Les exemples prédominants comprennent les règles Yara pour l'identification de spécimens de malware, Sigma pour la détection dans les journaux d'événements par exemple, le framework Mitre ATT&CK qui catégorise les tactiques et techniques utilisées par les attaquants, ainsi que Living Off The Land Binaries and Scripts (LOLBAS) qui identifie les outils légitimes utilisés malicieusement.

Ces approches reposent sur des comportements malveillants connus. La distinction entre les activités normales et les actions potentiellement malicieuses dans des contextes nouveaux ou ambigus reste un défi.

La présente invention a donc pour objectif de surmonter, au moins en partie, afin d'améliorer la détection de menaces cyber.

Les autres objets, caractéristiques et avantages de la présente invention apparaîtront à l'examen de la description suivante et des dessins d'accompagnement. Il est entendu que d'autres avantages peuvent être incorporés.

### RESUME

La présente invention concerne un procédé d'analyse d'au moins un évènement informatique, ledit procédé étant configuré pour être implémenté par au moins un système informatique, ledit procédé comprenant au moins les étapes suivantes :
a. Réception, par au moins un module de communication, d'au moins un évènement informatique, ledit évènement informatique comprenant une pluralité de champs, chaque champ de ladite pluralité de champs comprenant au moins une donnée;
b. Normalisation, par au moins un module de traitement de données, de chaque donnée de chaque champ de ladite pluralité de données dudit évènement informatique ;
c. Analyse, par au moins un module d'analyse, desdites données normalisées par rapport à des données de références associées à des évènements informatiques de référence d'une base de données primaire, l'étape d'analyse comprenant pour chaque donnée normalisée :
   i. Identification d'au moins un évènement informatique de référence, cette étape d'identification comprenant :
      A) Pour chaque valeur de ladite donnée normalisée, la recherche d'au moins un évènement de référence comprenant au moins une valeur similaire dans la base de données primaire;
   ii. Si l'évènement informatique de référence comprend, de préférence exactement, les mêmes champs avec les mêmes valeurs, alors l'évènement est légitime ;
   iii. Si l'évènement informatique de référence ne comprend pas, de préférence exactement, les mêmes champs avec les mêmes valeurs, alors :
      A) Calcul d'un score de criticité, par rapport audit évènement informatique de référence identifié, pour le ou les champs de ladite pluralité de champs dudit évènement informatique dont les valeurs sont différentes :
         ∘ Calcul de la diversité entre les valeurs associées audit évènement informatique et les valeurs associées audit évènement informatique de référence ; et
         ∘ Comparaison de cette diversité avec une première valeur seuil prédéterminée propre à chaque champ de sorte à obtenir un score de criticité ;
      B) Calcul d'un score de criticité global dudit évènement informatique en additionnant ensemble les scores de criticité calculés ;
      C) Ledit score de criticité global est configuré pour être utilisé pour une prise de décision par au moins un opérateur.

La présente invention concerne également un produit programme d'ordinateur comprenant une pluralité d'instructions qui lorsqu'elles sont exécutées par au moins un processeur exécutent le procédé selon la présente invention.

La présente invention concerne aussi un support de mémoire non transitoire comprenant un produit programme d'ordinateur selon la présente invention.

La présente invention concerne également un système informatique d'analyse d'au moins un évènement informatique, ledit système comprenant au moins :
a. Un module de communication configuré pour :
   i. Recevoir au moins un évènement informatique, ledit évènement informatique comprenant une pluralité de champs, chaque champ de ladite pluralité de champs comprenant au moins une donnée ;
b. Un module de traitement de données configuré pour :
   i. Normaliser chaque donnée de chaque champ de ladite pluralité de champs dudit évènement informatique ;
c. Un module d'analyse configuré pour :
   i. Analyser lesdites données normalisées par rapport à des données de références associées à des évènements informatiques de référence d'une base de données primaire ;
   ii. Identifier au moins un évènement informatique de référence;
   iii. Calculer un score de criticité, par rapport audit évènement informatique de référence identifié, pour le ou les champs de ladite pluralité de champs dudit évènement informatique dont les valeurs sont différentes ;
   iv. Calculer la diversité entre les valeurs associées audit évènement informatique et les valeurs associées audit évènement informatique de référence ;
   v. Comparer cette diversité avec une première valeur seuil prédéterminée propre à chaque champ de sorte à obtenir un score de criticité ;
   vi. Calculer la somme des scores de criticité calculés de sorte à calculer un score de criticité global.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
[Fig.1] La figure 1 représente schématiquement un procédé selon un mode de réalisation de la présente invention.
[Fig.2] La figure 2 représente schématiquement un système selon un mode de réalisation de la présente invention.
[Fig.3] La Figure 3 représente un diagramme illustrant plusieurs étapes d'un procédé selon un mode de réalisation de la présente invention.
[Fig.4] La Figure 4 représente un autre diagramme illustrant plusieurs autres étapes d'un procédé selon un mode de réalisation de la présente invention.
Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier les dimensions ne sont pas représentatives de la réalité.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :

Selon un exemple, l'évènement informatique comprend au moins deux composantes : une composante initiatrice d'au moins une action, et une composante action configurée pour effectuer au moins une action.

Selon un exemple, l'étape de recherche de valeurs similaires comprend la recherche d'un maximum de champ de correspondance entre l'évènement informatique et l'évènement informatique de référence.

Selon un exemple, le calcul de la diversité des valeurs comprend le calcul d'une variance.

Selon un exemple, la valeur seuil prédéterminée est une variance.

Selon un exemple, la présente invention comprend une étape de prise de décision à partir d'au moins un score de criticité et/ou dudit score de criticité global.

Selon un exemple, ladite décision peut comprendre l'émission d'une notification, et/ou l'exécution d'un protocole de sécurité informatique prédéterminé.

Selon un exemple, la présente invention comprend une étape d'analyse à partir d'au moins un score de criticité et/ou dudit score de criticité global.

Selon un exemple, la présente invention comprend une étape de calcul d'un pré-score de criticité comprenant :
a. La vectorisation des évènements informatiques de référence de sorte à générer une pluralité de vecteurs de référence ;
b. La vectorisation de l'évènement informatique de sorte à générer un vecteur évènementiel ;
c. Le calcul d'une distance entre le vecteur évènementiel et chaque vecteur de référence de ladite pluralité de vecteurs de référence ;
d. Sélection de la plus petite des distances calculées, cette distance sélectionnée correspondant audit pré-score de criticité.

Selon un exemple, le calcul de la diversité est réalisé par vectorisation.

Selon un exemple, la présente invention comprend au moins une étape de construction de ladite base de données primaires d'évènements informatiques de référence, l'étape de construction comprenant au moins :
a. Réception d'une pluralité d'évènements informatiques comprenant un ensemble de champs ;
b. Si l'ensemble des champs comprennent des valeurs identiques :
   i. Déduplication, par ledit module de traitement de données, de chaque évènement de ladite pluralité d'évènement informatique ;
   ii. Evaluation, par au moins un module d'évènement, du nombre de fois que l'évènement s'est produit ;
c. Normalisation, par ledit module de traitement de données, de chaque donnée de chaque évènement informatique de ladite pluralité d'évènements informatiques ;
d. Pour chaque évènement de ladite pluralité d'évènements informatiques :
   i. Recherche dans ladite base de donnée primaire si l'évènement informatique existe :
      A) Si l'évènement informatique existe dans ladite base de données primaire : modification des informations de fréquence dudit l'évènement informatique pour ajouter une nouvelle occurrence dudit évènement informatique, lesdites informations de fréquence comprenant au moins un nombre d'entité ayant reporté ledit évènement informatique, un nombre d'occurrence dudit évènement informatique, par exemple par jour, par mois, et/ou par année ;
      B) Sinon : Recherche dans une base de données secondaire :
         ∘ Si l'évènement informatique existe dans ladite base de données secondaire :
            ▪ Modification des informations de fréquence de l'évènement informatique, avec de préférence l'enregistrement de la nouvelle date à laquelle l'évènement informatique vient de se produire ;
            ▪ Si au moins une des informations de fréquence modifiées est supérieure à un seuil prédéterminé, déplacement dudit évènement informatique dans la base de données primaire ;
            ∘ Sinon, ajout de l'évènement dans la base de données secondaire

Selon un exemple, la présente invention comprend une phase d'apprentissage local pour adapter la base de données primaire à un périmètre spécifique, ladite phase comprenant :
a. La collecte d'événements informatiques locaux sur ledit périmètre spécifique ;
b. L'enrichissement de la base de données primaire avec lesdits événements informatiques locaux satisfaisant au moins un critère de fréquence prédéterminé ;
c. De préférence, la génération d'un rapport différentiel entre la base de données primaire avant et après ledit enrichissement ; et
d. La validation des événements informatiques ajoutés avant leur intégration définitive dans la base de données primaire.

Selon un exemple, la présente invention comprend au moins une étape de génération d'un rapport pour chaque évènement informatique comprenant :
a. Ledit évènement informatique avec ses champs, ses données, et ses valeurs ;
b. Ledit score de criticité global ;
c. De préférence, au moins un score de criticité d'au moins un champ de la pluralité de champs ;
d. Les évènements informatiques de référence dont le score de criticité global est inférieur à une seconde valeur seuil.

Selon un exemple, l'opérateur est un utilisateur humain ou une machine, de préférence comprenant une unité de prise de décision.

Les exemples et le langage conditionnel utilisés dans la présente description sont principalement destinés à aider le lecteur à comprendre les principes de la présente invention et non à limiter sa portée à ces exemples et conditions spécifiquement cités. On comprendra que la personne du métier peut concevoir divers agencements qui, bien qu'ils ne soient pas explicitement décrits ou représentés ici, incarnent néanmoins les principes de la présente invention et sont inclus dans son esprit et sa portée.

En outre, à titre d'aide à la compréhension, la description suivante peut décrire des mises en œuvre relativement simplifiées de la présente invention. Comme la personne de l'art le comprendra, diverses mises en œuvre de la présente technologie peuvent être d'une plus grande complexité.

De plus, la description ci-après énumérant les principes, les aspects et les mises en oeuvre de la présente invention, ainsi que leurs exemples spécifiques, vise à englober à la fois leurs équivalents structurels et fonctionnels, qu'ils soient actuellement connus ou développés à l'avenir. Ainsi, par exemple, il sera apprécié par la personne de l'art que tous les schémas fonctionnels ici représentent des vues conceptuelles de circuits illustratifs incorporant les principes de la présente invention. De manière similaire, on comprendra que tous les organigrammes, et similaires, représentent divers processus qui peuvent être sensiblement représentés sur des supports lisibles par ordinateur et ainsi exécutés par un ordinateur ou un processeur, que cet ordinateur ou processeur soit explicitement représenté ou non.

Les fonctions des différents éléments représentés sur les figures, y compris tout bloc fonctionnel dénommé « processeur » ou « module », peuvent être assurés par l'utilisation d'un matériel dédié ainsi que d'un matériel capable d'exécuter un logiciel en association avec un programme informatique ou des instructions appropriés. Lorsqu'elles sont fournies par un processeur, les instructions peuvent être fournies par un seul processeur dédié, par un seul processeur partagé, ou par une pluralité de processeurs individuels, dont certains peuvent être partagés. Dans certains modes de réalisation de la présente invention, le processeur peut être un processeur à usage général, tel qu'une unité centrale de traitement (CPU), par exemple. De plus, l'utilisation explicite du terme « processeur » ne doit pas être interprétée comme se référant exclusivement à du matériel capable d'exécuter des logiciels et peut implicitement inclure, sans s'y limiter, un circuit intégré spécifique à une application (ASIC), un réseau de portes programmables sur le terrain (FPGA), une mémoire morte (ROM) pour stocker des logiciels, une mémoire vive (RAM) et un stockage non volatile. D'autres matériels, conventionnels et/ou personnalisés, peuvent également être inclus.

Les modules logiciels, ou simplement les modules qui sont supposés être des logiciels, peuvent être représentés ici comme n'importe quelle combinaison d'éléments d'organigramme ou d'autres éléments indiquant l'exécution d'étapes de processus et/ou une description textuelle. De tels modules peuvent être exécutés par un matériel qui est expressément ou implicitement représenté. De plus, il doit être compris que le module peut inclure par exemple, mais sans s'y limiter, une logique de programme informatique, des instructions de programme informatique, un logiciel, un micrologiciel, des circuits matériels ou une combinaison de ceux-ci qui fournit les capacités requises.

Dans le contexte de la présente invention, un « évènement » ou « évènement informatique » se réfère à une action ou un ensemble d'actions se produisant au sein d'un système informatique. Plus précisément, un évènement informatique peut comprendre deux parties distinctes :
a. Une partie initiatrice d'au moins une action : Cette partie peut être caractérisée par le fait qu'elle prend en charge au moins une action, grâce à un programme qui exécute cette action.
b. Une partie action : Cette partie peut être caractérisée par l'action effectuée par le programme, ainsi que par la cible de cette action.

Dans le contexte de la présente invention, un « comportement » peut être définis comme des actions ou des événements se produisant au sein d'un système informatique. Par exemple, l'ouverture d'un document nommé « Bonjour.word.docx » par un utilisateur nommé Charles Xavier n'est généralement pas considérée comme un élément important pour l'analyse. Cependant, le traitement et la normalisation de ces données nécessitent des efforts considérables pour s'assurer qu'elles respectent une norme et établir des critères d'évaluation des événements par rapport à des normes génériques.

Dans le contexte de la présente invention, une ou des « Tables de comptage » se réfèrent à une ou des tables configurées pour compter des événements informatiques quotidiennement, mensuellement et annuellement pour chaque type d'événement informatique. Ces tables permettent avantageusement un suivi statistique d'occurrence des évènements.

Dans le contexte de la présente invention, une ou des « Tables de données » se réfèrent à une ou des tables spécifiques configurées pour stocker des informations détaillées sur les fichiers, les utilisateurs, les chemins, etc. Avec, de préférence, toutes les valeurs différentes possible identifiées après normalisation, comme décrit ci-après.

Selon un mode de réalisation, la présente invention offre un service d'analyse à la demande d'événements de sécurité, notamment via des systèmes de type Endpoint Detection and Response EDR ou Security Information and Event Management SIEM.

En particulier, un système SIEM est configuré pour la gestion de la sécurité en combinant la gestion des informations de sécurité (SIM) et la gestion des événements de sécurité (SEM). Le SIEM collecte et analyse les données de sécurité provenant de diverses sources (comme les journaux d'événements, les alertes de sécurité, etc.) pour fournir une vue d'ensemble de la sécurité de l'organisation. Il permet de détecter les incidents de sécurité, de les analyser et de répondre rapidement aux menaces potentielles.

Selon un mode de réalisation, la présente invention implémente avantageusement une méthodologie de normalisation et de contextualisation avancée pour transformer des données hétérogènes provenant de multiples sources en un format unifié, permettant une analyse cohérente et comparative. De préférence, le système évalue les événements en attribuant un score de risque, basé sur leur déviation par rapport aux modèles normatifs établis dans une base de données. Cette approche polyvalente et adaptable rend La présente invention particulièrement pertinent dans un paysage de cybersécurité où les menaces sont diversifiées, en constante évolution et où il est nécessaire de rapidement pouvoir évaluer des informations techniques.

Selon un mode de réalisation, la présente invention représente une approche révolutionnaire de la cybersécurité en se concentrant sur la détection des comportements anormaux sur la base d'un ensemble complet de données de comportements normaux connus. Cette invention, peut comprendre la technologie EDR, offre une solution non conventionnelle mais efficace au paysage des menaces en constante évolution en matière de cybersécurité. Les défis associés à la mise en œuvre de la présente invention comprennent la définition et le traitement des comportements, la standardisation des données et le calcul des scores de légitimité des événements.

Selon un mode de réalisation, la présente invention est configurée pour collecter des événements de sécurité provenant de sources variées et les normalise pour une uniformité, incluant la standardisation des noms d'utilisateurs, des chemins, et d'autres attributs, par exemple non limitatif. De préférence, la présente invention est configurée pour exploiter des informations stockées dans au moins un journal relativement à un évènement de sorte à pouvoir traiter ledit évènement.

De préférence, les événements informatiques sont prétraités pour la clarté et la pertinence, stockés dans une base de données secondaire qui comporte tous les évènements différents connus. La présente invention utilise, de préférence, deux bases de données structurées avec avantageusement 36 tables, incluant des tables pour les événements de fichier, d'exécution, d'accès processus, et réseau.

De préférence, la base de donnée primaire comporte tous les évènements communs à plusieurs entités, et la base de donnée secondaire tous les évènements. Avantageusement, un évènement passe de la base secondaire à primaire lorsque des critères statistiques sont validés, afin d'assurer qu'il s'agit d'un comportement non spécifique à un périmètre.

Selon un mode de réalisation, les événements sont filtrés pour ne conserver que les plus pertinents dans la base de données primaire, aussi dite principale. Selon un mode de réalisation, ladite base de donnée primaire est configurée pour être consultée au travers d'outils disponibles, via une Application Programming Interface API, par exemple.

Selon un mode de réalisation, des tables dédiées, dite de comptage, comptent les événements quotidiennement, mensuellement et/ou annuellement pour chaque type d'événement. Ces tables permettent avantageusement un suivi statistique d'occurrence des évènements. De préférence, des tables spécifiques, dites de données, stockent des informations détaillées sur les fichiers, les utilisateurs, les chemins, etc. Avantageusement, avec toutes les valeurs différentes possible identifiées après normalisation.

Selon un mode de réalisation, la présente invention est configurée pour fournir un système d'analyse à la demande, en traitant des évènements informatiques demandés (par un client ou partenaire par exemple) afin d'évaluer et scorer ces comportements par rapport à ce qui est connu dans une base de données, par exemple.

De préférence, le score est défini en fonction de l'écart entre un évènement informatique donné, avantageusement basé sur un modèle d'intelligence artificielle, et le plus proche évènement informatique identifié dans la base de données primaire.

Selon un mode de réalisation, après le prétraitement d'un évènement informatique, chaque champ textuel est vectorisé en utilisant un grand modèle de langage (Large Language Model LLM, en anglais). Pour les autres champs comme les ports ou plus généralement tout champ qui est un nombre, des opérations mathématiques sont utiliées pour les représenter sous forme de vecteur. De préférence, tous les vecteurs minimaux sont combinés en un seul vecteur, qui représente l'évènement informatique. Avantageusement, ces vecteurs sont enregistrés dans une base de données vectorielle. Pour l'attribution d'un score, le vecteur le plus similaire à celui de l'évènement informatique est alors recherché dans la base de données. De préférence, le score correspond à la distance entre les deux vecteurs.

La présente invention est avantageusement conçue pour être intégré efficacement et aisément dans des pipelines de cybersécurité, par exemple via une API, facilitant l'interconnexion avec des SIEM, Security Orchestration, Automation, and Response SOAR et d'autres outils. Cette intégration permet avantageusement aux équipes Security Operations Center SOC de bénéficier d'une analyse enrichie des événements de sécurité, aidant à distinguer avec précision les activités légitimes des menaces potentielles.

En outre, la présente invention est de préférence configurée pour contribuer à l'élaboration de règles pour des modèles de sécurité comme le Zero-Trust appliqué sur le système d'exploitation, par exemple, en ne permettant que les actions nécessaires, authentifiées et légitimes, renforçant ainsi la posture de sécurité.

Selon un mode de réalisation, l'usage d'une API de la présente invention offre une grande flexibilité, rendant possible son intégration dans divers environnements et systèmes, ce qui peut grandement bénéficier à la détection proactive des menaces et à la réponse aux incidents dans le domaine de la cybersécurité.

Selon un mode de réalisation, la présente invention concerne un procédé d'analyse d'au moins un événement informatique. De préférence, ledit procédé est configuré pour être implémenté par au moins un système informatique.

De préférence, ce procédé comprend plusieurs étapes :
a. Réception : un module de communication reçoit au moins un événement informatique, cet événement informatique comprenant une pluralité de champs. De préférence, chaque champ de ladite pluralité de champs contient au moins une donnée.
b. Normalisation : Un module de traitement de données normalise chaque donnée de chaque champ de ladite pluralité de données dudit événement informatique. La normalisation est configurée pour homogénéiser les données afin de permettre leur comparaison avec les données d'événements informatiques dits de référence. Par exemple, le nom d'utilisateur est remplacé par "user", les noms communs sont remplacés par un label prédéterminé, et des patterns prédéterminés peuvent être identifiés et être supprimés pour rendre homogène les données.
c. Analyse : Un module d'analyse analyse les données normalisées par rapport à des données de références associées à des événements informatiques de référence d'une base de données primaire. De préférence, l'étape d'analyse comprend pour chaque donnée normalisée :
   i. Identification d'un événement informatique de référence : Pour chaque valeur de ladite donnée normalisée, la recherche de valeurs similaires dans la base de données primaire est effectuée. Si l'événement informatique de référence comprend exactement les mêmes champs avec les mêmes valeurs, alors l'événement est légitime.
   ii. Calcul d'un score de criticité : Si l'événement informatique de référence ne comprend pas exactement les mêmes champs avec les mêmes valeurs, le calcul d'un score de criticité est effectué pour chaque champ dont les valeurs sont différentes. La diversité entre les valeurs associées à cet événement et les valeurs associées à l'événement informatique de référence est calculée et comparée à une valeur seuil prédéterminée propre à chaque champ pour obtenir un score de criticité. De préférence, dans le cas du calcul d'une variance, celle-ci est calculée sur la base de tous les évènements de references ;
   iii. Calcul d'un score de criticité global en effectuant la somme des scores de criticité calculés, de préférence en considérant un coefficient de pondération associé à chaque champ de ladite pluralité de champs. De préférence, le score de criticité global est obtenu en additionnant la valeur, également appelé le poids, de chaque champ. La somme des poids peut faire par exemple 100, et avantageusement, en fonction de critère de distance / différence / variance, un score correspondant au matching de chaque champ est attribué.

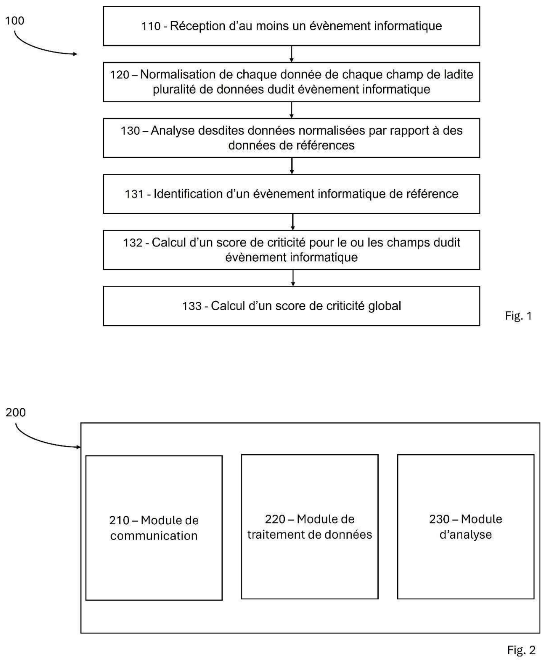

De manière plus détaillée et tel qu'illustré par les figures 1 et 2, la présente invention concerne un procédé 100 d'analyse d'au moins un évènement informatique.

De préférence, ledit procédé 100 est configuré pour être implémenté par au moins un système informatique 200.

Selon un mode de réalisation, ledit procédé 100 comprend au moins les étapes suivantes :
a. Réception 110, par au moins un module de communication 210, d'au moins un évènement informatique, ledit évènement informatique comprenant de préférence une pluralité de champs, chaque champ de ladite pluralité de champs comprenant avantageusement au moins une donnée;
b. Normalisation 120, par au moins un module de traitement de données 220, de chaque donnée de chaque champ de ladite pluralité de données dudit évènement informatique ;
c. Analyse 130, par au moins un module d'analyse 230, desdites données normalisées par rapport à des données de références associées à des évènements informatiques de référence d'une base de données primaire.

Selon un mode de réalisation, l'étape d'analyse 130 comprend, pour chaque donnée normalisée, les étapes suivantes :
a. Identification 131 d'un évènement informatique de référence, cette étape d'identification comprenant :
   i. Pour chaque valeur de ladite donnée normalisée, la recherche de valeurs similaires dans la base de données primaire;
b. Si l'évènement informatique de référence comprend, de préférence exactement, les mêmes champs avec les mêmes valeurs, alors l'évènement est légitime ;
c. Si l'évènement informatique de référence ne comprend pas, de préférence exactement, les mêmes champs avec les mêmes valeurs, alors :
   i. Calcul 132 d'un score de criticité, par rapport audit évènement informatique de référence identifié, pour le ou les champs de ladite pluralité de champs dudit évènement informatique dont les valeurs sont différentes :
      A) Calcul de la diversité entre les valeurs associées audit évènement informatique et les valeurs associées audit évènement informatique de référence ; et
      B) Comparaison de cette diversité avec une première valeur seuil prédéterminée propre à chaque champ de sorte à obtenir un score de criticité ;
   ii. Un score de criticité global dudit évènement informatique est calculé 133 en faisant la somme des scores de criticité calculés, de préférence en considérant au moins un coefficient de pondération associé à chaque champ considéré ;
   iii. Ledit score de criticité global est configuré pour être utilisé pour une prise de décision par au moins un opérateur ou par au moins un système automatique.

Avantageusement, la présente invention permet une amélioration de la détection des menaces. En effet, en normalisant et en analysant les données par rapport à des évènements de référence, la présente invention permet de distinguer plus efficacement les activités normales des actions potentiellement malicieuses. De plus, le calcul d'un score de criticité basé sur la diversité des valeurs permet une évaluation précise de la gravité des évènements informatiques, facilitant ainsi la prise de décision par l'opérateur.

Avantageusement, la présente invention peut être implémentée par divers systèmes informatiques et est configurée pour s'adapter à des données hétérogènes provenant de multiples sources, ce qui le rend polyvalent dans différents contextes de cybersécurité. De plus, en utilisant des données de référence et en calculant des scores de criticité, la présente invention permet de réduire le nombre de faux positifs, améliorant ainsi l'efficacité des systèmes de sécurité.

Enfin, de préférence, le score de criticité global obtenu permet à l'opérateur de prendre des décisions informées et rapides, ce qui est utile dans la gestion des incidents de sécurité.

Selon un mode de réalisation, l'événement informatique en question comprend au moins deux parties distinctes :
a. Une partie initiatrice d'au moins une action, c'est-à-dire l'indication d'un programme informatique faisant l'action. Cette partie est caractérisée par le fait qu'elle prend en charge au moins une action, et ce grâce à un programme qui exécute cette action.
b. Une partie action, c'est-à-dire l'action effectuée par ledit programme sur une cible. Cette partie est caractérisée par l'action effectuée par le programme, ainsi que par la cible de cette action.

Selon un mode de réalisation, l'étape de recherche de valeurs similaires comprend la recherche d'un maximum de champ de correspondance entre l'événement informatique et un événement informatique de référence.

Selon un mode de réalisation, cette étape de recherche implique une comparaison approfondie des caractéristiques des deux événements informatiques en question. Avantageusement, cette étape de recherche peut comprendre l'usage d'algorithmes de recherche avancés pour faciliter la comparaison et la classification des données.

Selon un mode de réalisation, le calcul de la diversité des valeurs comprend le calcul d'une variance. Cette caractéristique signifie que l'analyse de la diversité des valeurs implique le calcul statistique de la dispersion des données autour d'une moyenne. De préférence, cette approche permet de mesurer et de comparer la variabilité entre différents ensembles de données. Selon un mode de réalisation, la variance représente la mesure de la dispersion des valeurs autour d'une moyenne et peut être utilisée pour déterminer si les données sont dispersées ou concentrées autour de cette moyenne.

Selon un mode de réalisation, l'analyse de la diversité des valeurs peut être utilisée pour identifier les différences significatives entre différents ensembles de données.

Selon un mode de réalisation, la valeur seuil prédéterminée est une mesure de dispersion statistique qui représente l'écart type des données d'une population ou d'un ensemble de données. De préférence, cette valeur seuil est préalablement définie et fixe. Elle est utilisée pour identifier les différences significatives entre deux ensembles de données, par exemple.

Avantageusement, cette valeur seuil peut être utilisée pour identifier les différences significatives entre deux variables. Elle peut également être utilisée pour identifier les différences significatives entre deux groupes de données.

Selon un mode de réalisation, la présente invention comprend une étape de prise de décision à partir dudit score de criticité global. De préférence, cette étape de prise de décision est intégrée dans un système plus large qui permet de prendre des décisions automatiques en fonction du score de criticité global calculé. Il est utile de noter que la précision du score de criticité global peut avoir un impact significatif sur la qualité des décisions prises. Par conséquent, il est préférable d'utiliser une méthode de calcul du score de criticité global fiable et précise, tel que le propose la présente invention.

Enfin, il est également utile de noter que le score de criticité global peut être utilisé pour prendre des décisions à différents niveaux de hiérarchie dans un système. Par exemple, un score de criticité global peut être calculé à un niveau supérieur pour guider les décisions prises à un niveau inférieur.

Selon un mode de réalisation, la présente invention comprend une étape d'analyse à partir du score de criticité global. De préférence, cette étape d'analyse permet de traiter le score de criticité global obtenu en utilisant des méthodes appropriées pour déterminer les conséquences ou les actions à prendre en fonction du résultat obtenu. De cette manière, l'étape d'analyse peut aider à prendre des décisions informées et efficaces en fonction de la gravité ou de l'importance d'un événement, d'une situation ou d'un résultat.

Selon un mode de réalisation, la présente invention peut comprendre le calcul d'un pré-score de criticité. De préférence, la présente invention comprend une étape de vectorisation des événements informatiques de référence pour générer une pluralité de vecteurs de référence. Avantageusement, cette étape de vectorisation est réalisée en utilisant un algorithme spécifique qui transforme les données numériques des événements informatiques de référence en vecteurs de manière à conserver leur structure et leur signification.

Selon un mode de réalisation, la présente invention comprend également une étape de vectorisation de l'événement informatique pour générer un vecteur événementiel. De préférence, cette étape de vectorisation est réalisée en utilisant le même algorithme que celui utilisé pour la vectorisation des événements informatiques de référence.

Selon un mode de réalisation, la présente invention peut comprendre ensuite une étape de calcul d'une distance entre le vecteur événementiel et chaque vecteur de référence de ladite pluralité de vecteurs de référence.

De préférence, cette étape de calcul utilise un algorithme spécifique qui permet de mesurer la différence entre les vecteurs en fonction de leur composition numérique.

Selon un mode de réalisation, la présente invention comprend ensuite une étape de sélection de la plus petite des distances calculées.

De préférence, cette étape de sélection est réalisée en utilisant un algorithme spécifique qui permet de déterminer la distance minimale entre le vecteur événementiel et une pluralité de vecteurs de références, avantageusement minimale entre le vecteur événementiel et chaque vecteur de référence.

Selon un mode de réalisation, la distance sélectionnée correspond audit pré-score de criticité. De préférence, cette distance peut également être utilisée pour évaluer la criticité de l'événement informatique en question.

Selon un mode de réalisation, le calcul de la diversité est effectué par vectorisation. Cette méthode permet de représenter les données en tant que vecteurs dans un espace vectoriel, ce qui facilite leur analyse et comparaison. De préférence, chaque élément à analyser est converti en une représentation numérique (vectorisation) pour pouvoir être traité par des algorithmes de calcul de diversité. Cette technique présente plusieurs avantages :
a. Elle permet de visualiser les données dans un espace vectoriel, ce qui facilite leur analyse et comparaison.
b. Elle permet de traiter des données complexes (images, textes, etc.) en les convertissant en vecteurs, ce qui simplifie leur traitement par des algorithmes.
c. Elle permet de calculer la diversité entre différents éléments à l'aide d'algorithmes spécifiques tels que le calcul de la distance euclidienne ou du cosinus similitude.

De plus, cette technique peut être combinée avec d'autres techniques telles que l'apprentissage automatique pour améliorer les résultats de calcul de diversité.

Selon un mode de réalisation, la présente invention comprend une étape de construction d'une base de données primaire d'événements informatiques de référence. De préférence, cette étape comprend :
a. Réception d'une pluralité d'événements informatiques. Les événements reçus sont traités par le module de traitement de données.
b. Si l'ensemble des champs des différents événements contiennent des valeurs identiques, le module de traitement de données effectue une déduplication de chaque événement de la pluralité d'événements informatique. Cela signifie que si tous les champs sont de valeurs identiques pour un même événement, un même évènement informatique n'est enregistré qu'une seule fois dans la base de données primaire.
c. Évènement du nombre de fois que l'événement s'est produit, c'est-à-dire ajout d'une unité à un compteur, par au moins un module d'évènement. Cela permet de connaître la fréquence de chaque événement, c'est à dire le nombre d'occurrence d'un évènement.
d. Normalisation de chaque donnée de chaque événement informatique par ledit module de traitement de données. Cela signifie que les données des différents événements sont traitées pour être uniformes et compatibles entre elles.
e. Pour chaque événement, une recherche est effectuée dans la base de donnée primaire pour savoir si l'événement informatique existe déjà. Si l'événement existe déjà, les informations de fréquence sont modifiées pour ajouter le fait qu'il s'est produit une nouvelle fois. Sinon, une recherche est effectuée dans une base de données secondaire. Si l'événement existe déjà dans la base de données secondaire, les informations de fréquence sont modifiées pour ajouter le fait qu'il s'est produit une nouvelle fois.
f. Les données de fréquence sont examinées pour déterminer si l'événement peut être déplacé dans la base de données primaire. Cela est effectué en comparant la fréquence de l'événement avec un seuil de fréquence prédéterminé et/ou le nombre d'entités ayant rapporté cet événement, on notera qu'une entité peut être un système informatique, voire un applicatif spécifique d'un système informatique. Si les données de fréquence indiquent que l'événement peut être déplacé dans la base de données primaire car son occurrence dépasse ledit seuil, il est ajouté à cette dernière.
g. Si jamais l'évènement n'existe pas dans la base de données secondaire, il est ajouté dans la base de données secondaire.

Cette étape permet de construire en continue la base de données primaire et la base de données secondaire apportant une dimension dynamique à la présente invention et permettant son enrichissement dans le temps.

Selon un mode de réalisation, la présente invention comprend une fonctionnalité d'adaptation à au moins un contexte local d'un périmètre spécifique. Cette fonctionnalité permet d'affiner la base de données primaire pour réduire les faux positifs liés à des programmes ou comportements spécifiques à un périmètre donné mais légitimes dans ledit contexte.

La base de données primaire peut être configurée pour s'alimenter, avantageusement en permanence, avec les éléments collectés et, de préférence anonymisés, provenant des périmètres clients. Cette alimentation, avantageusement continue, permet de disposer d'une base de données primaire la plus complète possible, assurant ainsi des scores de criticité pertinents pour tous les événements et programmes communs rencontrés dans différents environnements.

Selon un mode de réalisation, un programme spécifique à un périmètre donné peut déclencher un faux positif s'il n'est pas connu de la base de données primaire. Pour éviter cette situation, la présente invention peut comprendre une phase d'apprentissage, de préférence local, configurée pour enrichir la base de données primaire avec des événements informatiques spécifiques au périmètre considéré.

Selon un mode de réalisation, la phase d'apprentissage local comprend les étapes suivantes :
a. Collecte d'événements informatiques sur le périmètre local sans attribution de score de criticité, ces événements étant destinés à l'apprentissage plutôt qu'à l'analyse immédiate ;
b. Application de la même politique de construction que celle utilisée pour la base de données primaire et la base de données secondaire, mais en utilisant une base de données secondaire locale initialement vierge ;
c. Enrichissement progressif de la base de données primaire avec les événements informatiques validés du périmètre local qui satisfont les critères de fréquence et/ou de légitimité prédéterminés.

De préférence, cette phase d'apprentissage local permet d'adapter la base de données primaire au contexte spécifique d'un périmètre tout en maintenant la cohérence globale du système d'analyse.

Selon un mode de réalisation, la présente invention comprend une étape de validation par au moins un opérateur, par exemple humaine, des modifications apportées à la base de données primaire lors de la phase d'apprentissage local. De préférence, cette étape comprend la génération d'un rapport différentiel entre la base de données primaire d'origine et la base de données primaire mise à jour après l'apprentissage local.

Avantageusement, ce rapport différentiel permet à un opérateur de visualiser les événements informatiques spécifiques qui ont été ajoutés à la base de données primaire. Cette visualisation permet de valider que les éléments ajoutés correspondent effectivement à des comportements légitimes spécifiques au périmètre et non à des sources malveillantes.

De préférence, cette validation assure que les événements informatiques spécifiques ajoutés ne faussent pas les futurs scores de criticité calculés pour d'autres événements informatiques. En effet, l'ajout d'événements malveillants dans la base de données primaire pourrait conduire à considérer comme légitimes des comportements qui sont en réalité malveillants, compromettant ainsi l'efficacité du système d'analyse.

Selon un mode de réalisation, le rapport différentiel comprend au moins :
a. Une liste des événements informatiques ajoutés à la base de données primaire ;
b. Pour chaque événement ajouté, les informations de fréquence associées ;
c. De préférence, une indication du périmètre d'origine de chaque événement ajouté ;
d. Avantageusement, une interface de validation permettant à l'opérateur d'approuver ou de rejeter chaque ajout proposé.

Selon un mode de réalisation, seuls les événements informatiques validés par l'opérateur sont définitivement intégrés dans la base de données primaire, dite également globale. Les événements rejetés peuvent être conservés dans une base de données locale spécifique au périmètre ou supprimés selon une politique de gestion prédéterminée.

Avantageusement, la fonctionnalité d'apprentissage local selon la présente invention permet de réduire significativement le taux de faux positifs dans des environnements spécifiques tout en maintenant un niveau de sécurité élevé. En effet, cette approche permet de prendre en compte les particularités de chaque périmètre sans compromettre la détection des menaces réelles.

De plus, la validation par un opérateur des ajouts à la base de données primaire assure un contrôle qualité, empêchant l'introduction d'événements malveillants qui pourraient être utilisés pour contourner le système de détection. Cette combinaison d'apprentissage automatique et de validation offre un équilibre optimal entre automatisation et sécurité.

Enfin, l'alimentation continue de la base de données primaire à partir de multiples périmètres clients permet une amélioration constante de la pertinence des scores de criticité, la présente invention bénéficiant de l'expérience collective de tous les utilisateurs tout en respectant l'anonymisation des données.

Selon un mode de réalisation, la présente invention comprend une étape de génération d'un rapport pour chaque événement informatique.

De préférence, ledit rapport comprend l'événement informatique avec ses champs, ses données et ses valeurs.

De préférence, le rapport comprend le score de criticité global associé à l'événement informatique, voire avantageusement au moins un score de criticité associé à au moins un champ.

Avantageusement, le rapport peut comprendre un nombre prédéterminé, par exemple 20, d'événements informatiques de référence qui ont un score de criticité global inférieur au second seuil et qui sont les plus proches, en termes de similarité ou de nombre de champs les plus proches, dudit évènement informatique en question.

Selon un mode de réalisation, l'opérateur peut être un utilisateur humain ou une machine, ce qui permet d'étendre la flexibilité et l'adaptabilité de la solution proposée à divers contextes.

Selon un mode de réalisation, l'opérateur est une machine : Cela signifie que le système peut être automatisé, ce qui permet d'effectuer des tâches répétitives et monotones sans l'aide humaine.

De préférence, l'opérateur peut comprendre une unité de prise de décision configurée pour prendre des décisions autonomes en fonction des données qu'il reçoit, ce qui permet d'améliorer la performance et la fiabilité du système.

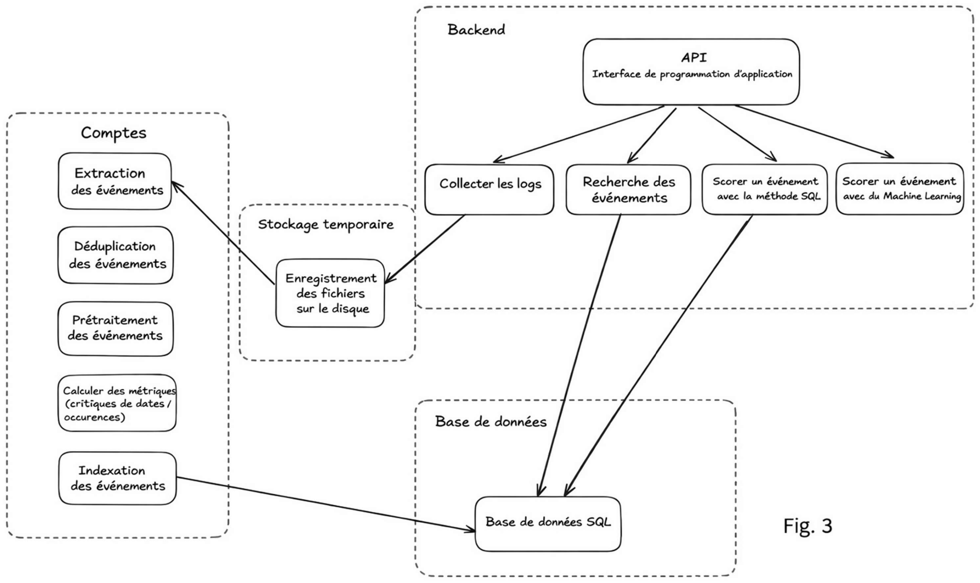

Selon un mode de réalisation, la figure 3 illustre un diagramme représentant une partie au moins du procédé selon la présente invention.

Dans la figure 3, ce diagramme représente un pipeline de traitement des données et une infrastructure backend conçus pour l'extraction, le prétraitement et l'analyse d'événements informatiques.

Selon la figure 3, la présente invention comprend une couche de calcul. Cette couche de calcul comprend :
a. Extraction des Événements:
   i. Les données brutes sont traitées pour extraire des événements significatifs.
   ii. Cette étape implique le parsing des données afin d'identifier des entités ou actions pertinentes.
b. Déduplication :
   i. Élimine les doublons pour garantir des entrées uniques dans les données.
   ii. Peut comprendre des algorithmes pour comparer les identifiants ou les métadonnées des événements.
c. Pré-traitement - Normalisation :
   i. Nettoie, transforme ou normalise les événements pour les préparer à une analyse ultérieure.
   ii. Peut comprendre la standardisation des formats, le remplissage des valeurs manquantes ou d'autres techniques de nettoyage des données.
d. Calcul des Métriques :
   i. Génère des métriques à partir des événements, telles que :
      A) Les comptes (ex. : fréquence des événements)
      B) Les métriques basées sur les dates (ex. : chronologies ou durées des événements)
e. Indexation des Événements dans une base de données, par exemple de type SQL (Structured Query Language):
   i. Les événements sont indexés pour faciliter leur recherche et leur récupération rapide.
   ii. Un format structuré, tel que JSON ou un index inversé, peut être utilisé pour les consultations rapides.
f. Fichier CSV par Entité :
   i. Les événements traités et indexés sont stockés dans des fichiers, par exemple de type CSV.
   ii. Chaque fichie représente une entité ou une catégorie spécifique.
   iii. De préférence, chaque ficher CSV comprend les évènements informatiques d'un ordinateur, qui appartient à une entité.
g. Stockage :
   i. Les données intermédiaires, y compris les événements extraits ou pré-traités, sont enregistrées dans un stockage pour un accès rapide et des sauvegardes.

Toujours selon la figure 3, la présente invention comprend une couche de dite backend. Cette couche backend comprend :
a. Une API :
   i. Un framework d'API RESTful, par exemple, peut agir comme la colonne vertébrale du système backend, permettant l'interaction entre les utilisateurs et la base de données.
   ii. Principales fonctionnalités de l'API :
      A) Collecte des journaux (logs), par exemple des fichiers CSV :
         ∘ Agrège les journaux ou données brutes entrantes pour les traiter.
      B) Recherche d'Événements, de préférence dans la base de données primaire :
         ∘ Permet aux utilisateurs de requêter et de récupérer des événements ou des informations spécifiques.
      C) Analyse des Événements (Score) :
         ∘ Applique des mécanismes de d'attribution de scores ou de classement pour évaluer les événements en fonction de métriques prédéfinies.
b. Base de Données :
   i. Sert de couche de stockage persistant.
   ii. Stocke les événements traités et indexés, les métriques et d'autres données pertinentes.
   iii. Permet des requêtes et une récupération de données efficaces.
c. Sauvegarde des Fichiers sur un Disque :
   i. Les journaux bruts ou les résultats intermédiaires du traitement sont enregistrés sur le disque pour assurer leur durabilité et leur traçabilité.
   ii. Sert de sauvegarde ou de journal d'audit.

Selon la figure 3, le flux des données peut être le suivant :
a. Le pipeline commence avec les données brutes, c'est-à-dire les fichiers CSV, traitées séquentiellement via les étapes d'extraction, de déduplication et de prétraitement/normalisation.
b. Les métriques sont calculées et indexées avant d'être stockées dans les fichiers CSV ou dans la base de données.
c. L'API backend facilite l'accès à ces données pour une analyse ou une visualisation plus poussée.
d. Le stockage, potentiellement temporaire, garantit que les résultats intermédiaires ne sont pas perdus, offrant fiabilité et flexibilité dans le flux de travail.

Cette figure illustre un diagramme qui combine efficacement un traitement intensif en calcul avec un backend évolutif pour prendre en charge l'analyse et la consultation d'événements en temps réel.

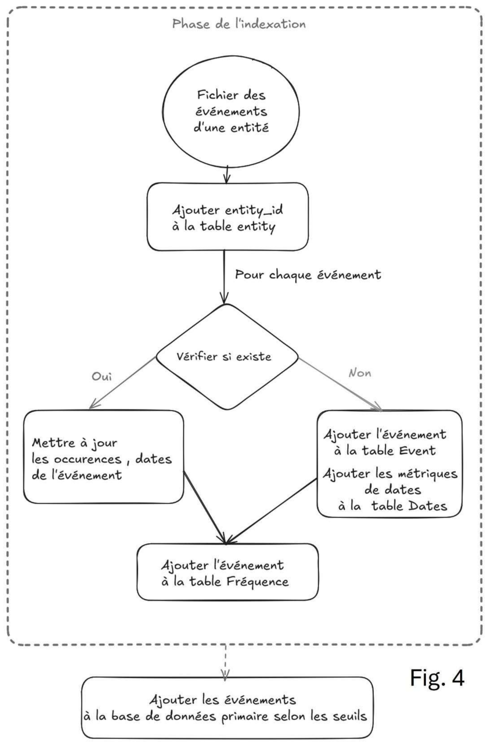

Selon un mode de réalisation, la figure 4 illustre un diagramme représentant un mode de réalisation d'indexation d'évènement selon la présente invention.

Dans la figure 4, et selon un mode de réalisation, un diagramme illustre des étapes d'indexation d'un évènement informatique, plus précisément des étapes permettant la construction de la base de données primaire.

Ainsi, selon la figure 4, ce diagramme comprend :
a. Une étape d'acquisition d'un ou de plusieurs fichiers CSV, chaque fichier pouvant comprendre au moins un évènement informatique : La présente invention comprend ainsi l'importation de fichiers CSV contenant des données liées à un ou des évènements informatiques.
b. Ajout du ou des évènements informatiques dans une ou plusieurs tables d'évènements : La présente invention comprend l'extraction de l'identification de chaque évènement informatique depuis le ou les fichiers CSV, puis ces identifications sont associés à une table dédiée appelée "Entity table". De préférence, chaque évènement est découp é dans une ou plusieurs tables, et lié à une table dédiée dite « entité » ;
c. Traitement des événements :
   i. Chaque événement est vérifié pour savoir s'il existe déjà dans une base de données secondaire:
      A) Oui : Si l'événement existe, la présente invention met à jour le nombre d'occurrences ('count') ainsi que les dates associées à cet événement.
      B) Non : Si l'événement n'existe pas, il est ajouté à la base de données secondaire avec ses dates correspondantes.
d. Ajout des événements dans une table de fréquence : Une fois l'étape de vérification et d'ajout terminée, les événements peuvent être ajoutés à une table de fréquence appelée "Freq table".
e. Ajout à la base de données primaire selon des seuils définis : Les événements sont ensuite transférés à la base de données primaire, en respectant des seuils ou des critères prédéfinis, tel que précédemment décrit.

La figure 4 illustre un processus structuré pour intégrer, vérifier, mettre à jour et gérer des données d'événements informatiques provenant de fichiers CSV dans des bases de données, tout en respectant des règles et des seuils de traitement.

De manière à illustrer la présente invention, des exemples vont maintenant être décrits de manière non limitative.

Voici un exemple de correspondance et de notation des champs :
Selon un mode de réalisation, la présente invention est configurée pour évaluer différents champs, comme par exemple : source_process_filename_id, target_process_filename_id, source_process_extension_id, etc.

Pour chaque champ, la présente invention vérifie de préférence si la valeur du champ correspond à une valeur cible spécifique. Si une correspondance est trouvée, avantageusement un score prédéfini est ajouté au score de similarité global de cet évènement. Si aucune correspondance n'est trouvée, un score de 0 est ajouté. Le score de similarité total pour chaque évènement est de préférence la somme des scores individuels des champs correspondants. Avantageusement, ce score total, aussi appelé score de criticité global de l'évènement, peut ensuite être arrondi à deux décimales à l'aide de la fonction ROUND.

Selon un exemple, le champ « utilisateurs » se compose d'un nom de domaine ou d'ordinateur suivi d'une barre oblique inverse «\», puis d'un nom d'utilisateur ou d'un nom de compte. La présente invention peut être configurée pour extraire le nom d'utilisateur ou le nom du compte. S'il s'agit d'un utilisateur générique commun tel que "NT SYSTEM », « NETWORK », « SYSTEM », « IIS_USRS », « ADMINISTRATEUR », « SERVICE », « LOCAL SERVICE », « NETWORK SERVICE », « GUEST », « ANONYMOUS », « SA », « ROOT », « WWW-DATA », « NOBODY », « FTP », par exemple. De préférence, ce nom est conservé tel quel. Selon un autre mode de réalisation, ce nom peut être normalisé. Ensuite, de préférence, la présente invention est configurée pour vérifier ce nom pour distinguer s'il s'agit d'un utilisateur local ou d'un utilisateur de domaine, par exemple.

Voici quelques exemples :
a. Dupont\MON_ENTREPRISE ⇒ Domain User
b. Système\AUTORITE NT ⇒ NTSystem
c. nucleon-pc\DESKTOP-B0MV2OM ⇒ Local User
d. SERVICE RÉSEAU\AUTORITE NT ⇒ Network Service

Concernant le domaine, la présente invention peut être configurée pour séparer le domaine en deux parties : un domaine supérieur et un domaine inférieur.

Voici quelques exemples :
a. exemple.nucleon-security.com ⇒ domaine supérieur : nucleon-security.com , ⇒domaine inférieur : exemple
b. Eu-teams.events.data.microsoft.com ⇒ domaine supérieur : microsoft.com , ⇒domaine inférieur : eu-teams.events.data

Concernant les addresse Internet Protocol IP, la présente invention peut être configurée pour détecter le type d'adresse IP et la version de celle via l'usage, par exemple, de librairie python bien connue.

Voici un exemple :
a. 142.250.179.72 ⇒ version : Ipv4 ⇒ type : public IP

Concernant le chemin, la présente invention peut être configurée pour extraire en premier le dispositif, puis le nom du fichier, l'extension dudit fichier puis des données dites data_path.

Voici quelques exemples :
a. Pour un dispositif :
   i. La présente invention peut comprendre une étape de vérification si le chemin commence par « \\ », ce qui indique un partage réseau, par exemple.
   ii. Ensuite, la présente invention peur vérifier la présence d'un deux-points « : » dans le chemin, ce qui indique généralement un lecteur local ou un lecteur amovible, si le lecteur est C ou D, Il est possible de supposer qu'il s'agit d'un lecteur local, sinon il est possible de supposer que ce n'est pas un lecteur local.
b. Pour un fichier :
   i. La présente invention peut être configurée pour extraire le nom du fichier et vérifier s'il se trouve dans une liste des fichiers système connus.
   ii. S'il s'agit d'un fichier système connu, le fichier peut conserver le nom.
   iii. S'il s'agit d'un nom aléatoire, la présente invention est configurée pour le renommer.
   iv. La présente invention peut également être configurée pour extraire l'extension du fichier.
   v. La présente invention peut aussi être configurée pour extraire la liste des composants du chemin, et/ou les dossiers et sous-dossiers du chemin d'accès, par exemple.

Voyons désormais des exemples en lien avec les étapes de normalisation d'un évènement informatique.

Exemple d'un évènement à analyser :
a. {"type": "read", "timestamp": "2024-09-05T11:10:55.948Z", "user": "DESKTOP-NJC0C1D\\hp", "process_path": "C:\\ProgramFiles\\WindowsApps\\Microsoft.WindowsTerminal_1.20.1 1781.0_x64__8wekyb3d8bbwe\\elevate-shim.exe", "file_path": "C:\\Windows\\System32\\ntdll.dll", "event_type": "read"}

Selon un mode de réalisation, présente invention peut comprendre une phase de pré-traitement. De préférence, ce prétraitement peut comprendre plusieurs étapes.

Ce pré-traitement peut commencer par une étape de normalisation des chaînes de caractères pour remplacer des valeurs ou éléments de valeurs spécifiques. Par exemple, les adresses IP peuvent être remplacées par les étiquettes {ipv4} ou {ipv6} selon leur version. Les nombres dans le champ "command" des événements d'exécution peuvent être remplacés par {integer}.

La présente invention est de préférence configurée pour identifier également les chaînes de caractères aléatoires à l'aide de méthodes du type Traitement du langage naturel NLP, cela permet alors de remplacer ces chaînes de caractères par {RANDOM}, ainsi que les versions par {VERSION}, par exemple.

De plus, la présente invention peut appliquer une approche similaire pour le nom d'utilisateur qui peut être présent dans un chemin d'accès, il va être remplacé par {USER}, par exemple, sauf si c'est un nom connu, comme par exemple : NTSystem.

Dans le cas ci-dessus, le chemin suivant :
a. C:\\ProgramFiles\\WindowsApps\\Microsoft.WindowsTerminal_1.20.1 1781.0_x64__8wekyb3d8bbwe\\elevate-shim.exe

Devient comme suit après normalisation :
b. Microsoft.WindowsTerminal_1.20.11781.0_x64__8wekyb3d8bbwe =>microsoft.windowsterminal_{VERSION}_x64_{RANDOM}

Après le pré-traitement de l'événement, la présente invention est configurée pour décomposer l'évènement dans un format prédéterminé, de type json, par exemple, avec des champs spécifiques à chaque type d'événement.

Par exemple, le champ "user" : DESKTOP-NJC0C1D\\hp ⇒{USER}

Par exemple, les champs communs pour tous les types d'événements =>
le programme source qui fait l'action :
a. Source_process_filename
b. Source_process_extension
c. Source_process_path
d. Source_process_device
e. source_process_(md5/sha1/sha256)
f. source_process_signature

Pour l'événement "File" (accès fichier : read / write / rename / delete)
a. target_file_filename
b. target_file_extension
c. target_file_path
d. target_file_device
e. target_file_(md5/sha1/sha256)
f. target_file_signature

Pour l'événement "Execute" (exécution d'un programme)
a. target_process_filename
b. target_process_extension
c. target_process_path
d. target_process_device
e. target_process_(md5/sha1/sha256)
f. target_process_signature
g. command

Pour l'événement "Open process" (accès à la mémoire d'un programme par un autre)
a. target_process_filename
b. target_process_extension
c. target_process_path
d. target_process_device
e. target_process_(md5/sha1/sha256)
f. target_process_signature

Pour l'événement "Network" (etablissement d'une connexion réseau par un programme)
a. Port
b. Protocol
c. Ip (version de l'adresse ip, type d'adresse IP)
d. Domaine (domaine supérieur, domaine inférieur)

Exemple de l'évènement en JSON après pré-traitement :
a. {'user': USER,
b. 'source_process_md5': None,
c. 'source_process_sha1': None,
d. 'source_process_sha256': None,
e. 'source_process_path': '\\program
f. files\\windowsapps\\microsoft.windowsterminal_{version}_x64_{rand om},
g. 'source_process_device': {'device_letter': "C", 'device_type': Local},
h. 'source_process_filename': elevate-shim,
i. 'source_process_extension': exe,
j. 'source_process_signature': None,
k. 'target_file_md5': None,
l. 'target_file_sha1': None,
m. 'target_file_sha256': None,
n. 'target_file_path': \\windows\\system32',
o. 'target_file_device': {'device_letter': "C", 'device_type': Local},
p. 'target_file_filename': ntdll,
q. 'target_file_extension':dll,
r. 'target_file_signature': None,
s. 'event_type': read

Nous allons à présent aborder des exemples d'attribution d'un score.

Selon un mode de réalisation, chaque champ de la pluralité de champs comprend une pondération, c'est-à-dire une valeur de pondération prédéfinie, tel un coefficient de pondération, autrement appelé un poids prédéfini, par exemple :
a. Poids communs (utilisés dans plusieurs événements) :
   i. user: 1
   ii. source_process_md5: 1
   iii. source_process_sha1: 1
   iv. source_process_sha256: 1
   v. source_process_signature: 2
   vi. source_process_path: 2 (pour "read", "rename", "write", "delete" et "open_process")
   vii. source_process_device: 1.25 (pour "read", "rename", "write", "delete" et "open_process")
   viii.target_process_md5: 1 (pour "execute" et "open_process")
   ix. target_process_sha1: 1 (pour "execute" et "open_process")
   x. target_process_sha256: 1 (pour "execute" et "open_process")
   xi. target_process_signature: 2 (pour "execute" et "open_process")
b. Événements "read", "rename", "write", "delete" :
   i. source_process_filename: 7
   ii. source_process_extension: 1.5
   iii. target_file_md5: 1
   iv. target_file_sha1: 1
   v. target_file_sha256: 1
   vi. target_file_filename: 8
   vii. target_file_extension: 1.5
   viii.target_file_path: 2
   ix. target_file_device: 1.25
   x. target_file_signature: 2
c. Événement "execute" :
   i. source_process_filename: 6
   ii. source_process_extension: 3
   iii. source_process_path: 4
   iv. source_process_device: 2
   v. target_process_filename: 7
   vi. target_process_extension: 3
   vii. target_process_path: 4
   viii.target_process_device: 2
   ix. command: 10
d. Événement "open_process" :
   i. source_process_filename: 8
   ii. source_process_extension: 1.5
   iii. target_process_filename: 9
   iv. target_process_extension: 1.5
   v. target_process_path: 2
   vi. target_process_device: 1.25
e. Événement "network" :
   i. source_process_filename: 5
   ii. source_process_extension: 3
   iii. source_process_path: 4
   iv. source_process_device: 2
   v. port: 7
   vi. protocol: 7
   vii. domain: 8
   viii.ip: 6

Selon un mode de réalisation, le coefficient de pondération de chaque champ de ladite pluralité de champs est considéré dans le calcul de la somme des scores de criticités claculés, ladite somme correspondant audit score de criticité global.

Selon un mode de réalisation, l'étape de calcul d'un score de criticité global peut comprendre au moins deux étapes :
a. Détermination des variances : Si la relation entre deux champs présente une grande variance, c'est-à-dire supérieure à une valeur seuil prédéterminée (par exemple, un processus source accède à de nombreux fichiers ou processus cibles), le poids, c'est-à-dire le coefficient de pondération, du champ en question peut être supprimé, car toutes les valeurs du champ cible sont possibles.
   i. Pour cela, la présente invention peut comprendre un tableau de variance ; ce tableau contient le nombre unique de chaque champ par rapport à un autre, et si le nombre excède un seuil prédéfini, il est alors considéré comme ayant une très haute variance. Par exemple, si le processus chrome.exe accède à près de 3000 adresses IP, le poids du champ IP est supprimé.
   ii. Après élimination de tous les champs qui ont une grande variance, la présente invention peut être configurée pour négliger les champs qui ne sont pas présents dans l'événement considéré.
   iii. Puis, la présente invention peut être configurée pour normaliser les coefficients de pondération des champs restants pour que leur sommes soit égale à 100%. Voici le résultat pour l'exemple précédent : {'source_process_filename': 29.166666666666668, 'target_file_filename': 33.33333333333333, 'source_process_extension': 6.25, 'target_file_extension': 6.25, 'source_process_path': 8.333333333333332, 'target_file_path': 8.333333333333332, 'event_type': 4.166666666666666, 'user': 4.166666666666666} ;
b. Ensuite, la présente invention comprend la recherche dans la base de données primaire des évènements similaires: Pour cela, la présente invention peut être configurée pour générer une requête SQL qui calcule, pour chaque événement de la base de données primaire, sa similarité en utilisant les coefficients de pondération associés aux différents champs, puis les scores les plus élevés sont considérés. Voici un exemple de requête : SELECT id, ROUND((CASE WHEN "source_process_filename_id" = 5107981 THEN 29.166666666666668 ELSE 0 END + CASE WHEN "target_file_filename_id" = 11937 THEN 33.33333333333333 ELSE 0 END + CASE WHEN "source_process_extension_id" = 1 THEN 6.25 ELSE 0 END + CASE WHEN "target_file_extension_id" = 25 THEN 6.25 ELSE 0 END + CASE WHEN "source_process_path_id" = 85 THEN 8.333333333333332 ELSE 0 END + CASE WHEN "target_file_path_id" = 7 THEN 8.333333333333332 ELSE 0 END + CASE WHEN "event_type_id" = 3 THEN 4.166666666666666 ELSE 0 END + CASE WHEN "user_id" = 1 THEN 4.166666666666666 ELSE 0 END), 2) AS similarity_score FROM "File_event" ORDER BY similarity_score DESC LIMIT 1; Selon un mode de realisation, la similarité entre un évènement informatique et un évènement informatique de reference prend en compte les coefficients de ponderation des champs considérés.
De préférence, la requête est configurée pour parcourir toutes les lignes de la table d'événement et vérifier si chaque champ existe. Si c'est le cas, un coefficient de pondération est ajouté. Le résultat est un score pour chaque ligne qui reflète la similarité de la ligne avec l'événement considéré, c'est-à-dire un score de criticité pour chaque champ considéré dudit évènement considéré.

De manière avantageuse, grâce à l'extraction des champs et leur normalisation, la présente invention permet de construire une base de données primaire dite de référence, et de détecter des comportement suspects ou "anormaux".

Selon un mode de réalisation, la présente invention concerne également un système informatique 200 d'analyse d'au moins un événement informatique. Ce système 200 comprend avantageusement plusieurs modules distincts qui travaillent ensemble pour analyser les données provenant des événements informatiques et identifier les comportements anormaux.

Le premier module est le module de communication 210, configuré pour recevoir au moins un événement informatique. Chaque événement informatique comprend une pluralité de champs, chaque champ comprenant au moins une donnée. Le module de communication collecte ces données et les transmet au module de traitement de données.

Le deuxième module est le module de traitement de données 220, configuré pour normaliser chaque donnée de chaque champ de ladite pluralité de champs dudit événement informatique. Cette étape de normalisation consiste à remplacer les valeurs ou éléments de valeurs spécifiques par des valeurs standardisées, comme les adresses IP par les étiquettes {ipv4} ou {ipv6} selon leur version, comme précédent expliciter

Le troisième module est le module d'analyse 230, configuré pour analyser les données normalisées par rapport à des données de références associées à des événements informatiques de référence d'une base de données primaire. Cette étape d'analyse consiste à identifier au moins un événement informatique de référence, calculer un score de criticité pour les champs dont les valeurs sont différentes et calculer la diversité entre les valeurs associées à cet événement et les valeurs associées à l'événement de référence, de préférence en considérant les coefficients de pondération des champs considérés.

Avantageusement, la première étape d'analyse est configurée pour identifier un événement informatique de référence dans la base de données primaire.

La deuxième étape d'analyse est configurée pour calculer un score de criticité pour chaque champ dont les valeurs sont différentes. Ce score est défini en fonction de l'écart entre la valeur de cet événement et la valeur de l'événement de référence identifié dans la base de données primaire.

La troisième étape d'analyse est configurée pour calculer la diversité entre les valeurs associées à cet événement et les valeurs associées à l'événement de référence. Cette diversité est définie en fonction du nombre unique de chaque champ par rapport à un autre, comme le nombre unique des processus cibles par rapport à un processus source. Selon un exemple, si un nombre excède un seuil prédéfini, cette diversité est considérée comme très élevée et ce champ est supprimé de l'analyse.

La quatrième, et potentiellement dernière, étape d'analyse peut être configurée pour comparer la diversité calculée avec une valeur seuil prédéterminée propre à chaque champ pour obtenir un score de criticité pour chaque champ considéré. Puis un score de criticité global est calculer à partir des scores de criticité de chaque champ. Si le score de criticité global est supérieur au seuil prédéfini, l'événement informatique est considéré comme anormal et une alerte de sécurité est générée.

Comme illustré par la figure 2, le système 200 informatique selon un mode de réalisation de la présente invention comprend plusieurs modules distincts 210, 220, 230 qui travaillent ensemble pour analyser les données provenant des événements informatiques et identifier les comportements anormaux. Le module de communication 210 collecte les données provenant des événements informatiques, le module de traitement de données 220 normalise ces données et le module d'analyse 230 compare ces données avec des données connues pour identifier les comportements anormaux. Les résultats de cette analyse sont utilisés pour générer des alertes de sécurité en cas de comportement anormal détecté.

De manière plus précise et selon un mode de réalisation, la présente invention concerne un système informatique d'analyse d'au moins un évènement informatique.

De préférence, ledit système 200 comprend au moins :
i. Un module de communication 210 configuré pour recevoir 110 au moins un évènement informatique, ledit évènement informatique comprenant une pluralité de champs, chaque champ de ladite pluralité de champs comprenant au moins une donnée ;
ii. Un module de traitement de données 220 configuré pour normaliser 120 chaque donnée de chaque champ de ladite pluralité de champs dudit évènement informatique ;

b. Un module d'analyse 230 configuré pour :
i. Analyser 130 lesdites données normalisées par rapport à des données de références associées à des évènements informatiques de référence d'une base de données primaire ;
ii. Identifier 131 un évènement informatique de référence, cette étape d'identification ;
iii. Calculer 132 un score de criticité, par rapport audit évènement informatique de référence identifié, pour le ou les champs de ladite pluralité de champs dudit évènement informatique dont les valeurs sont différentes ;
iv. Calculer la diversité entre les valeurs associées audit évènement informatique et les valeurs associées audit évènement informatique de référence ;
v. Comparer cette diversité avec une première valeur seuil prédéterminée propre à chaque champ de sorte à obtenir un score de criticité ;
vi. Calculer la somme des scores de criticité calculés de sorte à calculer 133 un score de criticité global

Selon un mode de réalisation, le système informatique 200 comprend un serveur central et plusieurs stations de travail.

Selon un mode de réalisation, chaque station de travail est reliée au serveur central via une connexion réseau.

Selon un mode de réalisation, le système informatique 200 est équipé d'un système de sécurité avancé pour protéger les données et les informations sensibles des utilisateurs.

Selon un mode de réalisation, le système informatique 200 est conçu pour être scalable et pouvoir gérer un grand nombre d'utilisateurs simultanément.

Selon un mode de réalisation, le système informatique 200 est équipé d'un système de sauvegarde automatique des données pour garantir la sécurité des données des utilisateurs.

Selon un mode de réalisation, le système informatique 200 est conçu pour être compatible avec différents types de périphériques et logiciels.

Selon un mode de réalisation, le système informatique 200 est équipé d'un système de gestion des mises à jour automatiques pour garantir la sécurité et la performance du système.

Selon un mode de réalisation, le système informatique 200 représenté dans la figure 2 peut être équipé d'un processeur configuré pour le traitement de données, pour effectuer des calculs et exécuter des opérations. De préférence, il est également muni d'une interface utilisateur intuitive pour faciliter l'utilisation par les utilisateurs non-expérimentés.

Selon un mode de réalisation, le système informatique 200 peut être connecté à un réseau de communication pour permettre la transmission et l'échange de données avec d'autres systèmes similaires. Avantageusement, il est également équipé d'un système de sécurité avancé pour protéger les données sensibles des intrusions et des attaques malveillantes, ledit système de sécurité étant configuré pour coopérer avec la présente invention.

Selon un mode de réalisation, le système informatique 200 peut être muni d'un stockage de données de grande capacité pour permettre la sauvegarde et l'archivage des données importantes. De plus, il est possible d'ajouter un système de backup pour assurer la sécurité des données en cas de défaillance du système.

Selon un mode de réalisation avantageuse, le système informatique 200 est équipé d'une interface graphique intuitive et ergonomique pour faciliter la navigation des utilisateurs.

La présente invention offre un système d'analyse à la demande d'événements de sécurité, qui utilise une méthodologie avancée de normalisation et de contextualisation pour transformer des données hétérogènes provenant de multiples sources en un format unifié. Cette approche permet une analyse cohérente et comparative des événements de sécurité, qui sont évalués par un système basé sur des scores de risque. Un des objectifs de la présente invention est d'identifier tout écart par rapport aux comportements normaux connus, qui pourrait indiquer une menace potentielle. Cette invention est particulièrement pertinente dans le paysage de cybersécurité où les menaces sont diversifiées et en constante évolution. Elle fonctionne selon la philosophie Zero Trust, qui se concentre sur la liste des éléments connus et la création de règles pour les autoriser. La technologie EDR peut être utilisée pour collecter des données à partir des points d'extrémité et créer une base de données d'événements connus..

L'invention n'est pas limitée aux modes de réalisations précédemment décrits et s'étend à tous les modes de réalisation couverts par les revendications.

## Revendications

1. Procédé (100) d'analyse d'au moins un évènement informatique, ledit procédé (100) étant configuré pour être implémenté par au moins un système informatique (200), ledit procédé (100) comprenant au moins les étapes suivantes :
a. Réception (110), par au moins un module de communication (210), d'au moins un évènement informatique, ledit évènement informatique comprenant une pluralité de champs, chaque champ de ladite pluralité de champs comprenant au moins une donnée;
b. Normalisation (120), par au moins un module de traitement de données (210), de chaque donnée de chaque champ de ladite pluralité de données dudit évènement informatique ;
c. Analyse (130), par au moins un module d'analyse (230), desdites données normalisées par rapport à des données de références associées à des évènements informatiques de référence d'une base de données primaire, l'étape d'analyse comprenant pour chaque donnée normalisée :
i. Identification (131) d'au moins un évènement informatique de référence, cette étape d'identification comprenant :
• Pour chaque valeur de ladite donnée normalisée, la recherche d'au moins un évènement de référence comprenant au moins une valeur similaire dans la base de données primaire, ladite recherche comprenant la recherche d'un maximum de champ de correspondance entre l'évènement informatique et l'évènement informatique de référence de sorte à identifier un unique évènement informatique de référence le plus similaire ;
ii. Si l'évènement informatique de référence comprend, de préférence exactement, les mêmes champs avec les mêmes valeurs, alors l'évènement est légitime ;
iii. Si l'évènement informatique de référence ne comprend pas, de préférence exactement, les mêmes champs avec les mêmes valeurs, alors :
• Calcul (132) d'un score de criticité, par rapport audit évènement informatique de référence identifié, pour le ou les champs de ladite pluralité de champs dudit évènement informatique dont les valeurs sont différentes :
A. Calcul, pour chaque champ ayant des valeurs différentes, de la diversité entre les valeurs dudit champ associées audit évènement informatique et les valeurs dudit même champ associées audit évènement informatique de référence ; et
B. Comparaison de cette diversité calculée pour chaque champ avec une première valeur seuil prédéterminée propre à chaque champ de sorte à obtenir un score de criticité pour chaque champ ;
• Calcul (133) d'un score de criticité global dudit évènement informatique en additionnant ensemble les scores de criticité calculés pour chaque champ ;
• Ledit score de criticité global est configuré pour être utilisé pour une prise de décision par au moins un opérateur.

2. Procédé (100) selon la revendication précédente dans lequel l'évènement informatique comprend au moins deux composantes : une composante initiatrice d'au moins une action, et une composante action configurée pour effectuer au moins une action.

3. Procédé (100) selon l'une quelconque des revendications précédentes dans lequel le calcul de la diversité des valeurs comprend le calcul d'une variance, ladite variance étant calculée sur la base de tous les événements de référence de la base de données primaire pour le champ considéré.

4. Procédé (100) selon l'une quelconque des revendications précédentes dans lequel la valeur seuil prédéterminée est une variance.

5. Procédé (100) selon l'une quelconque des revendications précédentes comprenant une étape de prise de décision à partir d'au moins un score de criticité et/ou dudit score de criticité global.

6. Procédé (100) selon l'une quelconque des revendications précédentes comprenant une étape d'analyse à partir d'au moins un score de criticité et/ou dudit score de criticité global.

7. Procédé (100) selon l'une quelconque des revendications précédentes comprenant une étape de calcul d'un pré-score de criticité comprenant :
a. La vectorisation des évènements informatiques de référence de sorte à générer une pluralité de vecteurs de référence ;
b. La vectorisation de l'évènement informatique de sorte à générer un vecteur évènementiel ;
c. Le calcul d'une distance entre le vecteur évènementiel et chaque vecteur de référence de ladite pluralité de vecteurs de référence ;
d. Sélection de la plus petite des distances calculées, cette distance sélectionnée correspondant audit pré-score de criticité.

8. Procédé (100) selon la revendication précédente dans lequel le calcul de la diversité est réalisé par vectorisation.

9. Procédé (100) selon l'une quelconque des revendications précédentes comprenant au moins une étape de construction de ladite base de données primaires d'évènements informatiques de référence, l'étape de construction comprenant au moins :
a. Réception d'une pluralité d'évènements informatiques comprenant un ensemble de champs ;
b. Si l'ensemble des champs comprennent des valeurs identiques :
i. Déduplication, par ledit module de traitement de données, de chaque évènement de ladite pluralité d'évènement informatique ;
ii. Evaluation, par au moins un module d'évènement, du nombre de fois que l'évènement s'est produit ;
c. Normalisation, par ledit module de traitement de données, de chaque donnée de chaque évènement informatique de ladite pluralité d'évènements informatiques ;
d. Pour chaque évènement de ladite pluralité d'évènements informatiques :
i. Recherche dans ladite base de donnée primaire si l'évènement informatique existe :
• Si l'évènement informatique existe dans ladite base de données primaire : modification des informations de fréquence dudit l'évènement informatique pour ajouter une nouvelle occurrence dudit évènement informatique, lesdites informations de fréquence comprenant au moins un nombre d'entité ayant reporté ledit évènement informatique, un nombre d'occurrence dudit évènement informatique ;
• Sinon : Recherche dans une base de données secondaire :
1. Si l'évènement informatique existe dans ladite base de données secondaire :
A. Modification des informations de fréquence de l'évènement informatique ;
B. Si au moins une des informations de fréquence modifiées est supérieure à un seuil prédéterminé, déplacement dudit évènement informatique dans la base de données primaire ;
2. Sinon, ajout de l'évènement dans la base de données secondaire

10. Procédé (100) selon la revendication précédente, comprenant une phase d'apprentissage local pour adapter la base de données primaire à un périmètre spécifique, ladite phase comprenant :
a. La collecte d'événements informatiques locaux sur ledit périmètre spécifique ;
b. L'enrichissement de la base de données primaire avec lesdits événements informatiques locaux satisfaisant au moins un critère de fréquence prédéterminé ; et
c. La validation des événements informatiques ajoutés avant leur intégration définitive dans la base de données primaire.

11. Procédé (100) selon l'une quelconque des revendications précédentes comprenant au moins une étape de génération d'un rapport pour chaque évènement informatique comprenant :
a. Ledit évènement informatique avec ses champs, ses données, et ses valeurs ;
b. Ledit score de criticité global ;
c. Les évènements informatiques de référence dont le score de criticité est inférieur à une seconde valeur seuil ;

12. Procédé (100) selon l'une quelconque des revendications précédentes dans lequel l'opérateur est un utilisateur humain ou une machine, de préférence comprenant une unité de prise de décision.

13. Produit programme d'ordinateur comprenant une pluralité d'instructions qui lorsqu'elles sont exécutées par au moins un processeur exécutent le procédé selon l'une quelconque des revendications 1 à 12.

14. Support de mémoire non transitoire comprenant un produit programme d'ordinateur selon la revendication précédente.

15. Système (200) informatique d'analyse d'au moins un évènement informatique, ledit système (200) comprenant au moins :
a. Un module de communication (210) configuré pour :
i. Recevoir (110) au moins un évènement informatique, ledit évènement informatique comprenant une pluralité de champs, chaque champ de ladite pluralité de champs comprenant au moins une donnée ;
b. Un module de traitement de données (220) configuré pour :
i. Normaliser (120) chaque donnée de chaque champ de ladite pluralité de champs dudit évènement informatique ;
c. Un module d'analyse (230) configuré pour :
i. Analyser (130) lesdites données normalisées par rapport à des données de références associées à des évènements informatiques de référence d'une base de données primaire ;
ii. Identifier (131) au moins un évènement informatique de référence ;
iii. Calculer (132) un score de criticité, par rapport audit évènement informatique de référence identifié, pour le ou les champs de ladite pluralité de champs dudit évènement informatique dont les valeurs sont différentes ;
iv. Calculer la diversité entre les valeurs associées audit évènement informatique et les valeurs associées audit évènement informatique de référence ;
v. Comparer cette diversité avec une première valeur seuil prédéterminée propre à chaque champ de sorte à obtenir un score de criticité ;
vi. Calculer la somme des scores de criticité calculés de sorte à calculer (133) un score de criticité global.
